# EUROPÄISCHE PATENTSCHRIFT

(11) **EP 3 419 303 B1**
(45) Veröffentlichungstag und Bekanntmachung des Hinweises auf die Patenterteilung: **27.01.2021**
(21) Anmeldenummer: 18171611.9
(22) Anmeldetag: 09.05.2018
(51) Int. Cl.: H04Q 9/00, F16K 31/60, F16K 37/00, F17C 13/02

(54) **SYSTEM UND VERFAHREN ZUR ERFASSUNG UND FERNÜBERWACHUNG VON BEWEGUNGSZUSTÄNDEN EINES HANDRADS**
SYSTEM AND METHOD FOR CAPTURING AND REMOTE MONITORING OF MOVEMENT CONDITIONS OF A HAND WHEEL
SYSTÈME ET PROCÉDÉ DE DÉTECTION ET DE SURVEILLANCE À DISTANCE D'ÉTATS DE DÉPLACEMENT D'UN VOLANT

(30) Priorität: 24.06.2017 DE 102017006015
(43) Veröffentlichungstag der Anmeldung: 26.12.2018
(73) Patentinhaber: Messer Group GmbH, 65812 Bad Soden (DE)
(72) Erfinder: MÜNZEL, Joachim, 65779 Kelkheim (DE); DIERCKX, Marc, 24939 Flensburg (DE)
(74) Vertreter: Münzel, Joachim R.

(56) Entgegenhaltungen:
- WO-A1-2016/156059
- US-A1- 2016 245 426

## Beschreibung

Die Erfindung betrifft ein System zur Erfassung und Fernüberwachung von Bewegungszuständen eines Handrads eines Ventils zum Regulieren des Durchflusses durch eine fluidführende Leitung, mit einer Sensoreinheit zum Erfassen von Bewegungszuständen des Handrads und einer mit der Sensoreinheit datenverbundenen Empfangseinheit.

Insbesondere betrifft die Erfindung ein System zur Erfassung und Fernüberwachung von Bewegungszuständen eines manuell zu betätigenden Handrads, dass dem Entnahmeventil eines Behälters zum Speichern von Gas in verflüssigter oder unter Druck stehender Form zugeordnet ist. Als "Behälter zum Speichern von Gas" sollen dabei insbesondere sowohl Druckgasflaschen oder Anordnungen mehrerer, zu sogenannten Druckgasflaschenbündeln oder Druckbündelstationen zusammengefassten Druckgasflaschen, als auch Behälter zum Speichern von Gas in verflüssigter Form, wie beispielsweise Standtanks, verstanden werden, die mit einem oder mehreren mit einem Handrad ausgerüsteten Entnahmeanschlüssen zur Entnahme des gespeicherten Gases ausgerüstet sind. Als "Druckgasflaschen" sollen hier insbesondere handelsübliche Behälter mit einem Volumen zwischen 5 Litern und 200 Litern zum Speichern von Gasen, insbesondere technischer Gase, wie Luft- oder Edelgase oder Gasgemische, bei einem Fülldruck zwischen 150 bar und 300 bar, verstanden werden. Die Erfindung ist jedoch nicht auf die Erfassung und Fernüberwachung der Bewegungszustände von Handrädern derartiger Entnahmeventile beschränkt, sondern auch für andere Anwendungen geeignet, bei denen Absperrarmaturen zur Regulierung oder Sperrung des Durchflusses von Fluiden manuell mittels Handrädern betätigt werden, wie beispielsweise bei handbetätigten Ventilen in fluidführenden Leitungen, Regelsystemen u. dergleichen.

Der Begriff "Handrad" soll hier sehr allgemein verstanden werden und jedes dreh- oder schwenkbar gelagerte Element zum manuellen Betätigen eines Ventils oder einer Absperrarmatur umfassen, also neben üblichen Handrädern insbesondere dreh- oder schwenkbar gelagerte Hebelanordnungen oder Kurbeln.

Informationen über den Zustand von manuell betätigten Ventilen, wie beispielsweise ein Öffnungszustand oder eine Information über einen vorliegenden Defekt oder eine mögliche Fehlfunktion stehen derzeit in den meisten Fällen nicht in digitaler Form zur Verfügung, sondern müssen manuell eruiert und ggf. von Hand in eine digitale Verarbeitungseinheit eingegeben werden. Es wäre zwar vorstellbar, eine Fernüberwachung etwa mittels einer Kamera durchzuführen, die Bilder der zu überwachenden Ventile an eine Leitstelle übermittelt. Diese Methode wäre allerdings insbesondere bei einer großen Anzahl von zu überwachenden Ventilen mit einem enormen Aufwand verbunden und beispielsweise bei der Überwachung einer großen Anzahl von Druckgasflaschen, etwa bei der Abfüllung und der anschließenden Lagerung oder während eines Transports, kaum praktikabel.

Im Bereich von Druckgasflaschen hat es jedoch bereits Versuche gegeben, Informationen über die Zustände der Druckgasflasche zu digitalisieren und einer Fernüberwachung zugänglich zu machen. Beispielsweise beschreibt die US 7 619 523 B2 ein System zur digitalen Lagerüberwachung mittels RFIDs. In den Druckschriften WO 2016/146765 A1, WO 2016/156059 A1 und WO 2016/146786 A1 werden Kommunikationssysteme beschrieben, bei denen Flaschenzustände, wie Standort, Fülldruck, Temperatur u. ä. über Sensoren erfasst und von einem Prozessor einer im Bereich des Entnahmeventils der Druckgasflasche angeordneten Auswerteeinheit verarbeitet werden. Die verarbeiteten Daten werden anschließend auf einer an der Druckgasflasche angeordneten Anzeigeeinheit oder Projektionsfläche angezeigt und können zusätzlich mittels eines RFID- oder NFC-Signals drahtlos an externe Projektionseinheiten übermittelt werden, beispielsweise an einen Computer, ein Mobiltelefon oder eine Datenbrille.

In der US 7 114 510 B2 und der US 8 776 795 B2 werden Ventilanordnungen für Druckgasflaschen für medizinische Gase beschrieben, in denen ein Sensor oder mehrere Sensoren, ein Zeitgeber, ein Prozessor für die Datenverarbeitung, eine Speichereinheit und ein Display integriert sind. Die Sensoren erfassen das Öffnen und Schließen des Handrads zusammen mit einer Information über die Zeitpunkte des jeweiligen Ereignisses. Diese Informationen werden zusammen mit weiteren in der Speichereinheit abgelegten Informationen, wie beispielsweise einer Kennung der Druckgasflasche oder Daten zur deren Befüllung oder Daten von mit dem jeweiligen Gas behandelten Patienten, vom Prozessor verarbeitet und im Display nach einem vorgegebenen Programm angezeigt. Die so erstellten Daten können zudem an eine Rechnereinheit übermittelt und dort weiter verarbeitet werden, beispielsweise zur Erstellung von Daten über die durchgeführte Therapie oder zur Erstellung von Rechnungen.

US 2016/0245426 A1 offenbart eine ventilintegrierte Druckregelvorrichtung, die am Auslass einer Gasflasche angebracht werden kann und die Gasmenge in der Flasche überwachen kann. Die Vorrichtung enthält eine elektronische Steuerung, ein elektronischer Alarm und die elektronische Anzeige, die von einer wiederaufladbaren Batterie gespeist werden.Zusätzliche Funktionen und Sicherheitsmerkmale können über zusätzliche intern angeordnete Sensoren und/oder drahtlose oder fest verdrahtete Kommunikation mit einem oder mehreren Hilfsgeräten bereitgestellt werden.

Diese bekannten Ventilanordnungen sind allerdings in Bau, Installation und Wartung sehr aufwändig, anfällig gegenüber Beschädigungen und vergleichsweise teuer. Ihr Einbau lässt sich wirtschaftlich nur für Druckgasflaschen darstellen, die für hochpreisige Produkte bestimmt sind, wie beispielsweise bestimmte Medizingase. Für den Einbau in Druckgasflaschen für Standardprodukte im Industriegasebereich, wie etwa Schweißschutzgase oder technische Gase, sind sie dagegen kaum geeignet.

Aufgabe der vorliegenden Erfindung ist es daher, ein einfach zu installierendes und zu handhabendes System zu schaffen, um wesentliche Informationen über den Zustand eines per Handrad manuell betätigten Ventils für eine fluidführende Leitung in digitaler Form bereit zu stellen und einer Fernüberwachung zugänglich zu machen. Gelöst ist diese Aufgabe durch eine Vorrichtung mit den Merkmalen des Patentanspruchs 1 sowie mit einem Verfahren mit den Merkmalen des Patentanspruchs 8. Vorteilhafte Ausgestaltungen der Erfindung sind in den Unteransprüchen angegeben.

Ein System der eingangs genannten Art und Zweckbestimmung ist also erfindungsgemäß dadurch gekennzeichnet, dass die Sensoreinheit eine Sensorgruppe mit einem oder mehreren Sensoren zum Erfassen einer Bewegung des Handrads und Erzeugen eines eine Information über die Bewegung enthaltenden digitalen Signals und eine Sendeeinheit zum drahtlosen Übertragen des von der Sensorgruppe erzeugten digitalen Signals an die Empfangseinheit umfasst, und die Empfangseinheit mit einer externen Steuereinheit in Datenverbindung bringbar ist und mit einer Auswertesoftware ausgerüstet ist, die so ausgebildet ist, dass sie die von der Sensoreinheit übermittelten digitalen Signale mit digitalen Signalen vorgegebener Normzustände vergleicht und im Falle einer vorgegebenen Abweichung ein Signal an die Steuereinheit abgibt.

Erfindungsgemäß wird also von einer Sensorgruppe, die zumindest einen Bewegungssensor oder eine Gruppe von Bewegungssensoren enthält, eine Information über eine Drehbewegung des Handrads erfasst, diese digitalisiert und als digitales Signal selbsttätig in vorgegebenen Zeitabständen oder auf Abruf, d.h. nach Abgabe eines von der Steuereinheit über die Empfangseinheit an die Sensoreinheit übermittelten Signals, an eine Empfangseinheit übermittelt. Das digitale Signal enthält nicht lediglich eine Information über eine Öffnung bzw. Sperrung des Ventils, sondern auch eine Information über den Öffnungsgrad, beispielsweise über die Anzahl der Drehungen, die bei der manuellen Betätigung des Handrads durchgeführt wurden. Gleichzeitig mit den Bewegungsdaten wird eine das Handrad bzw. den Standort des Handrads individualisierende Kennung übermittelt, die die Zuordnung der Bewegungszustände zu einem bestimmten Handrad ermöglicht.

Die Sensorgruppe ist bevorzugt direkt am Handrad montiert und wird bei der Bewegung des Handrads mitbewegt. Die Sensorgruppe erfasst in diesem Fall die eigene, durch die Bewegung des Handrads ausgelöste Bewegung. Die Sensorgruppe kann dabei auch an ein bestehendes Handrad befestigt werden, beispielsweise durch Kleben, wodurch das erfindungsgemäße System in einfacher Wiese auch an bereits vorhandenen Handräder nachgerüstet werden kann, beispielsweise in Handrädern eines Leitungssystems oder einer Druckgasflasche.

In der Empfangseinheit erfolgt die eigentliche Interpretation und Auswertung der Sensordaten. Die in einem Rechner der Empfangseinheit enthaltene Auswertesoftware überführt ("interpretiert") die von der Sendeeinheit empfangenen Signale in Informationen über den Öffnungszustand des Ventils und vergleicht diese mit Signalen vorgegebener Normzustände. Bei den Normzuständen handelt es sich um Bewegungszustände am Handrad, wie sie im üblichen Gebrauch vorgenommen werden. Insbesondere handelt es sich dabei um das ordnungsgemäße Öffnen und Schließen des Ventils mittels des Handrads oder das Offenhalten des Ventils für eine bestimmte Dauer. Diesen Bewegungszuständen entsprechen digitale Signale, die in einem Speicher der Empfangseinheit abgelegt und für den Vergleich mit den von der Sensoreinheit regelmäßig übermittelten Signalen abgerufen werden. Wird dabei innerhalb einer gewissen Toleranz eine Abweichung des übermittelten Signals von den Signalen der Normzuständen festgestellt, beispielsweise im Falle eines nicht den Vorgaben entsprechend geöffneten oder nicht vollständig geschlossenen Ventils, wird dies der Steuereinheit übermittelt. Dies ermöglicht einer Bedienperson der Steuereinheit, geeignete Maßnahmen zu ergreifen, wie beispielsweise das vollständige Schließen des Ventils zu veranlassen.

Bei der Steuereinheit kann es sich beispielsweise um ein zentrales Rechenzentrum, einen ortsfesten oder mobilen Computer, eine Internet-Anwendung oder und eine Applikation auf einem Smartphone handeln. Als Datenverbindung zwischen der Empfangseinheit und der Steuereinheit kommt insbesondere eine, bevorzugt drahtlose, Internetverbindung in Betracht. Erfindungsgemäß besteht also die Möglichkeit, eine oder mehrere Empfangseinheiten von einem mobilen Gerät aus, beispielsweise einem tragbaren Computer oder einem Mobiltelefon, anzusteuern und Informationen über einzelne Ventile zu erfragen.

Das erfindungsgemäße System eignet sich besonders zur Fernüberwachung von Entnahmeventilen von Behältern zur Lagerung von Gasen in verflüssigter oder unter Druck stehender Form, also beispielsweise Druckgasflaschen, Gasflaschenbündel Standtanks. In diesem Fall erfasst die Sensoreinheit die am Handrad des Entnahmeventils des Behälters manuell vorgenommenen Bewegungen.

In dem Falle, dass das Handrad einem Entnahmeventil eines Druckgasbehälters oder einem Gasflaschenbündel zugeordnet ist, ist es zweckmäßig, die Sensoreinheit so auszubilden, dass neben der Erfassung von Bewegungszuständen des Handrads auch Bewegungszustände des Druckgasbehälters bzw. des

Druckgasflaschenbündels selbst erfassbar sind. Auf diese Weise können insbesondere Abweichungen von Normzuständen bei der Bewegung der Druckgasflasche oder des Druckgasflaschenbündels erfasst werden, etwa im Falle eines Sturzes oder einer unsachgemäßen Handhabung.

Die Signale der Normzustände können beispielsweise vor Inbetriebnahme des Systems empirisch ermittelt und im Speicher der Empfangseinheit abgelegt werden. Die Erfindung sieht jedoch vor, dass die in einer Empfangseinheit erfassten Normzustände während des Betriebs im Rahmen einer intelligenten Erfassung nach einem Auswerteprogramm auf statistischer Basis erlernt werden. Beispielsweise werden die Bewegungszustände der in einem bestimmten räumlichen Bereich überwachten Handräder über einen längeren Zeitraum erfasst und zu einem Standardmuster von üblicherweise, d.h. statistisch signifikant gehäuft vorgenommenen Bewegungen des Handrads zusammengeführt. Beispielsweise ist eine ordnungsgemäße Öffnung des Ventils mit einer bestimmten Mindestdrehung des Handrads verbunden, die von der Sensorgruppe erfasst werden kann. Eine wesentliche Abweichung des von der Sensoreinheit übermittelten Signals von den Signalen aller in der Empfangseinheit gespeicherten Standardmustern führt dann zu einem Signal der Empfangseinheit an die Steuereinheit. "Wesentlich" bedeutet hier, dass im Auswerteprogramm ein Algorithmus vorgesehen ist, der einen Grad der Abweichung vom Normsignal berechnet und einen Grenzwert vorgibt, bei dessen Überschreiten die Abweichung als nicht mehr normgerecht eingestuft wird. Der Speicher der Empfangseinheit kann darüber hinaus bevorzugt auch Informationen über bestimmte von der Norm abweichende Zustände enthalten, beispielsweise Informationen über Signale, die typischerweise beim Umfallen oder Rollen einer Druckgasflasche entstehen. In diesem Fall ist die Auswertesoftware der Empfangseinheit so ausgebildet, dass im Falle der Übereinstimmung der Signale die Abgabe eines Notsignals an die Steuereinheit erfolgt.

Mit einer geeigneten Ausgestaltung der in der Empfangseinheit vorhandenen Auswertesoftware können der Steuereinheit nicht nur Fehlfunktionen und Abweichungen, sondern auch Änderungen von Normzuständen übermittelt werden. So wird beispielsweise einer Druckgasflaschenanordnung nach einer Abfüllung und anschließender Qualitätskontrolle von einem Bediener der Steuereinheit in einer in der Steuereinheit vorliegenden Datenbank, die Informationen über die von der Steuereinheit überwachten Druckgasflaschenanordnungen enthält, der Normzustand "unbenutzt" zugeordnet. Dieser Normzustand ändert sich dann bei der ersten erfassten Bewegung des Handrads automatisch in einen Normzustand "in Verwendung".

Bevorzugt ist als Sendeeinheit ein aktiver Sender vorgesehen. Die Übermittlung der Informationen an die Empfangseinheit erfolgt beispielsweise über Bluetooth, WiFi oder GSM. Die Sendeeinheit ist bevorzugt derart ausgelegt, dass die von der Sensoreinheit erfassten Informationen in regelmäßigen Zeitabständen mit einem Intervall von beispielsweise 5-60s an die Empfangseinheit übertragen werden. Bevorzugt handelt es sich bei dem aktiven Sender um eine auf iBeacon basierende Einheit (ein sogenannter "Beacon"), der neben der Übertragung von Informationen auf eine mittlere Distanz von bis zu 100m auch eine Information über die Entfernung des Senders vom Empfänger übermittelt. Auf diese Weise werden zeitnah aktuelle Informationen über die erfassten Bewegungen übertragen. Anstelle der Verwendung von iBeacon kommen im Übrigen auch vergleichbare Sendeverfahren mit einem im Betrieb niedrigen Energieverbrauch ("low energy" Sendeverfahren) in Betracht; bei Bedarf kann auch eine Übertragungstechnologie mit größerer Reichweite eingesetzt werden, die auch Distanzen von über 100m zur Sendeeinheit erlauben.

Alternativ zu einer Einrichtung, bei der eine regelmäßige Absendung eines Signals durch die Sendeeinheit erfolgt, können Sendeeinheit und Empfangseinheit auch so ausgebildet sein, dass eine Übermittlung des Signals von der Sendeeinheit erst nach Aufforderung durch ein entsprechendes Signal der Empfangseinheit erfolgt. Auch können Sendeeinheit und Empfangseinheit so ausgebildet sein, dass ein solches Signal der Empfangseinheit durch eine Bedienperson der Steuereinheit, die mit der Empfangseinheit in Datenverbindung steht, ausgelöst wird.

Eine bevorzugte und bereits am Markt vergleichsweise kostengünstig erhältliche Sensorgruppe enthält einen 6-Achsen-Bewegungssensor mit Sensoren für die axiale Bewegung in drei Raumrichtungen und für Drehbewegungen um drei Drehachsen. Die Detektion der Drehbewegungen erfolgt beispielsweise in Form von magnetischen Winkelsensoren oder elektromechanischen Neigungssensoren. Darüber hinaus kann die Sensorgruppe zusätzlich einen Lichtsensor und/oder einen Feuchtigkeitssensor und/oder einen Drucksensor und/oder einen Temperatursensor enthalten, die jeweils in vorteilhafter Weise für die Erfassung von Zuständen einsetzbar sind, die für den Betrieb des Ventils wichtig sind. Beispielsweise vermittelt die Temperatur am Standort einer Druckgasflasche oder eines Tanks eine Information über die Zuverlässigkeit eines angezeigten Druckwerts, oder der Lichtsensor vermittelt eine Information über eine auf ein Entnahmeventil einer Druckgasflasche aufgeschraubte - oder möglicherweise nicht korrekt aufgeschraubte - Abdeckkappe. Insbesondere für Ventile, die an Behältern oder Leitungen mit gefährlichen Inhalten, wie beispielsweise Kohlenmonoxid, montiert sind, kommen vorteilhaft Gassensoren zum Einsatz, die mit der Sendeeinheit in Datenverbindung stehen und als Detektoren für mögliche Leckagen dienen können. Vorteilhaft ist zudem, wenn die Sensorgruppe und die Sendeeinheit und ggf. ein digitaler Speicher in einem gemeinsamen Gehäuse der Sensoreinheit integriert sind.

Eine besonders vorteilhafte Ausgestaltung der Erfindung sieht vor, dass als Empfangseinheit ein IOT-Gateway (IOT: "Internet of Things") vorgesehen ist, das über ein Kommunikationsnetzwerk, beispielsweise das Internet, GSM ("Global System for Mobile Communications"),UMTS ("Universal Mobile Telecommunications System"), GPRS ("General Packet Radio Service") oder ein Telefonnetz mit einer Auswerteapplikation datenverbunden ist. Die Auswerteapplikation kann dabei als Software in einem ein mit dem IOT-Gateway datenverbundenen, fest installierten oder mobilen Rechner gespeichert sein, oder auch beispielsweise als Internet-Applikation in einem Webserver, der über mobile Endgeräte, wie beispielsweise Smartphones, dezentral mit mehreren IOT-Gateways zu kommunizieren imstande ist.

Bevorzugt ist die Sensorgruppe mit einem digitalen Speicher zum zumindest vorübergehenden Speichern der von der Sensorgruppe erfassten digitalen Signale ausgerüstet. Im Speicher werden Informationen über bestimmte wesentliche Ereignisse zumindest für eine begrenzte Zeitdauer abgelegt, z.B. Informationen über eine am Handrad durchgeführte Bewegung oder über einen detektierten Sturz der mit der Sensoreinheit ausgerüsteten Druckgasflasche. Dadurch ist es möglich, auch Informationen über derartige Ereignisse zu erhalten, die während einer kurzzeitigen Unterbrechung der Datenverbindung zur Empfangseinheit eintreten, beispielsweise während des Transports der mit dem fernüberwachten Ventil ausgerüsteten Anordnung in eine andere Halle oder auf einem nicht mit einer Empfangseinheit ausgerüsteten Transportfahrzeug.

Die Steuereinheit steht bevorzugt mit einer Mehrzahl an Empfangseinheiten und diese wiederum jeweils mit mehreren Sensoreinheiten in Datenverbindung. Beispielsweise erfasst eine Empfangseinheit digitale Signale der Sensoreinheiten aller innerhalb eines Raumes, beispielsweise eines Lagers oder auf einem Transportfahrzeug befindlichen Druckgasflaschen oder aller manuell zu bedienender Ventile in einer Leitungsanordnung. Durch die Datenverbindung der Mehrzahl an Empfangseinheiten mit einer zentralen Steuereinheit wird eine umfassende Fernüberwachung der Ventile gewährleistet. Vorteilhaft ist dabei, dass in der Steuereinheit eine Datenbank vorliegt, die Informationen über die erfassten Ventile sowie die entsprechenden Leitungsabschnitte oder Behälter enthält. Es ist darüber hinaus vorteilhaft, wenn eine Sensoreinheit die Signale automatisch an eine Empfangseinheit sendet, sobald die Sensoreinheit in den Empfangsbereich dieser Empfangseinheit gelangt. In diesem Falle sind entsprechende Kommunikationssysteme vorzusehen, die die Möglichkeit des Bestehens einer Datenverbindung zwischen der Sensoreinheit und der Empfangseinheit laufend prüfen und ggf. eine Datenverbindung herstellen. Darüber hinaus sind die Empfangseinheit/en und die Steuereinheit zweckmäßigerweise so ausgebildet, dass über die Steuereinheit eine Datenverbindung zwischen Empfangseinheiten zu Zwecken des Datenabgleiches herstellbar ist - beispielsweise in Fällen, in denen durch Transport mit den fernüberwachten Ventilen bestückten Anordnungen, beispielsweise Druckgasflaschen, aus dem Empfangsbereich einer ersten Empfangseinheit in den einer anderen wechselt.

Die Aufgabe der Erfindung wird auch durch ein Verfahren zur Erfassung und Fernüberwachung von Bewegungszuständen eines Handrads eines Ventils zum Regulieren des Durchflusses durch eine fluidführende Leitung gelöst, bei dem eine Sensorgruppe eine Bewegung des Handrads erfasst, die erfassten Bewegungen in digitale Signale umwandelt werden, die digitalen Signale zusammen mit einer Kennung des Handrads mittels einer Sendeeinheit in vorgegebenen Zeitabständen drahtlos an eine Empfangseinheit übermittelt werden, in der Empfangseinheit die von der Sendeeinheit übermittelten digitalen Signale mit in der Empfangseinheit gespeicherten Signalen von Normzuständen verglichen werden, und im Falle einer Abweichung des übermittelten Signals von den Signalen der Normzustände ein Signal von der Empfangseinheit an eine mit der Empfangseinheit datenverbundene Steuereinheit abgegeben wird.

Erfindungsgemäß werden also von der Sensoreinheit Bewegungen am Handrad erfasst und in digitale Signale umgewandelt, die in der Empfangseinheit als "normgerecht" oder "nicht normgerecht" interpretiert werden. Im Falle der Interpretation als "nicht normgerecht" ergeht ein Signal an die Steuereinheit, welches insbesondere eine Bedienperson der Steuereinheit über das Vorliegen eines von der Norm abweichenden Zustands informiert.

Die Übermittlung der Informationen von der Sendeeinheit der Sensoreinheit erfolgt bevorzugt selbsttätig in regelmäßigen Zeitabständen. Hierzu ist die Sendeeinheit mit einem Zeitgeber ausgerüstet, die die Information enthaltende Signale in zeitlichen Abständen von beispielsweise 5s bis 60s absenden, wie dies beispielsweise bei einem iBeacon-Standard erfolgt. Alternativ oder ergänzend dazu können die Signale auch auf Abruf bereitgehalten werden. In diesem Fall enthält die Sendeeinheit ihrerseits eine Empfangseinheit zum Empfangen eines die Übermittlung der Informationen des Bewegungssensors startenden Auslösesignals, das beispielsweise von der Empfangseinheit abgegeben wurde, etwa nach entsprechender Kommunikation der Empfangseinheit mit der Steuereinheit - beispielsweise nach einem GATT-Protokoll, bei dem in diesem Sinne "Server" und "Client" - Rollen der Empfangseinheit und der Sendeeinheit jeweils festgelegt werden.

Bevorzugt werden die Normzustände im Betrieb des erfindungsgemäßen Systems dadurch "erlernt", dass Informationen einer Mehrzahl von Handrädern, die von den jeweiligen Sendeeinheiten an eine Empfangseinheit übermittelt wurden, laufend erfasst und nach einem statistischen Algorithmus ausgewertet werden, wobei statistisch signifikant gehäuft auftretende Zustände als Normzustand definiert und zum Abgleich mit den von der Sendeeinheit eines einzelnen Handrads übermittelten Informationen verwendet werden. Die auf diese Weise durch eine Empfangseinheit ermittelten Normzustände können bevorzugt auch - über Kommunikation mit der Steuereinheit - an andere Empfangseinheiten übermittelt werden. Dadurch ist es möglich, für alle beteiligten Empfangseinheiten einheitliche Normzustände zu definieren.

Die Erfindung ist insbesondere für den nachträglichen Einbau in vorhandene Handräder in Leitungsanordnung oder Behältern geeignet. Hierzu sind bevorzugt Sensorgruppe, Wandlereinheit und Sendeeinheit und ggf. digitaler Speicher in einem möglichst kompakten Gehäuse angeordnet, das in einfacher Weise, beispielsweise durch Aufkleben auf das Handrad befestigt wird. Ein Eingriff in sicherheitsrelevante Teile des Ventils oder der Leitung oder Behälters etwa in Form einer Bohrung ist dazu nicht erforderlich. Insbesondere bei der Fernüberwachung von Ventilen mobiler Behälter, wie Druckgasflaschen oder Druckgasflaschenbündel, sollte die Sensoreinheit eine möglichst große Zahl unterschiedlicher Sensoren aufweisen, um möglichst differenzierte Daten über die Bewegung des Handrads und/oder der Flasche detektieren zu können.

Anhand der Zeichnungen sollen Ausführungsbeispiele der Erfindung näher erläutert werden. In schematischen Ansichten zeigen:
Fig.1: Ein erfindungsgemäßes System zum Erfassen und Fernüberwachen der Bewegungszustände eines Handrads,
Fig. 2: den Aufbau einer Sensoreinheit eines erfindungsgemäßen Systems,
Fig. 3: ein erfindungsgemäßes System zur Erfassung und Fernüberwachung einer Anordnung von Druckgasflaschen.

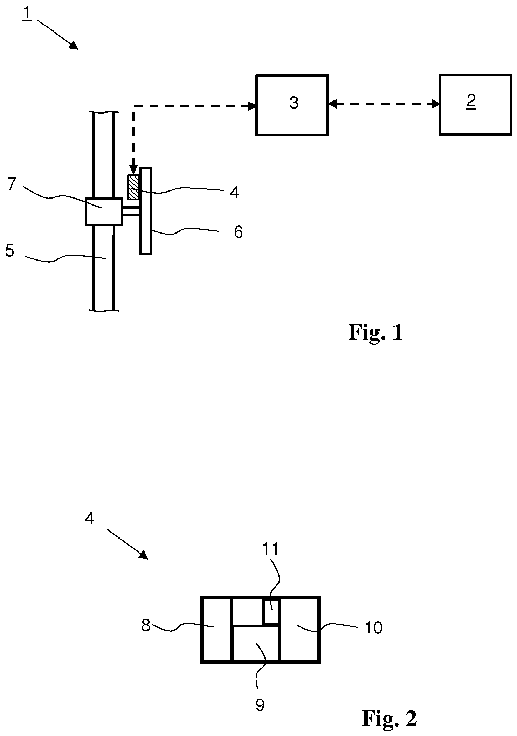

Das in Fig. 1 gezeigte erfindungsgemäße System 1 umfasst eine Steuereinheit 2, eine lokale Empfangseinheit 3 und eine Sensoreinheit 4. Die Steuereinheit 2, bei der es sich beispielsweise um einen zentralen Rechner oder um ein mit einem Webserver verbundenes mobiles Endgerät handelt, steht mit der Empfangseinheit 3 und mit weiteren, hier nicht gezeigten Empfangseinheiten in einer bevorzugt drahtlosen Datenverbindung. Beispielsweise besteht zwischen der Steuereinheit 2 und der Empfangseinheit 3 eine drahtlose Internetverbindung. Eine gleichfalls drahtlose Datenverbindung besteht zwischen der Empfangseinheit 3 und der Sensoreinheit 4.

Die Sensoreinheit 4 ist fest mit dem Handrad 6 eines Ventils 7 verbunden, beispielsweise ist sie auf der dem Ventil 7 zugewandten Unterseite des Handrads 6 aufgeklebt. Das Ventil 7 dient dazu, den Durchfluss eines fluiden Mediums durch eine Leitung 5 zu kontrollieren. Bei dem fluiden Medium handelt es sich beispielsweise um ein gasförmiges oder flüssiges Medium, das die Leitung 5 durchströmt. Die Betätigung des Ventils 7 erfolgt manuell durch Drehung des Handrads 6.

Wie in Fig. 2 gezeigt, besitzt die Sensoreinheit 4 jeweils eine Sensorgruppe 8 zum Erfassen einer Bewegung des Handrads 6. Die Sensorgruppe umfasst eine Wandlereinheit 9, in der die erfassten Bewegungen in digitale Signale umgewandelt werden, und eine Sendeeinheit 10 zum drahtlosen Übermitteln der digitalen Signale an die Empfangseinheit 3. Weiterhin ist in der Sensoreinheit 4 ein digitaler Speicher 11 angeordnet, in dem die digitalen Signale zumindest für eine gewisse Zeitdauer gespeichert werden.

Im Betreib des Systems 1 werden die von der Sensoreinheit 4 kontinuierlich erfassten und digitalisierten Informationen über den Bewegungszustand des Handrads 6 in regelmäßigen Zeitabständen von beispielsweise 10s bis 60s an die Empfangseinheit 3 übermittelt. In einem digitalen Speicher der Empfangseinheit 3 liegen Normsignale vor, die für beim ordnungsgemäßen Gebrauch des Handrads 6 vorgenommenen Bewegungen charakteristisch sind, beispielsweise Signale, die eine mehrfache Drehung beim Öffnen oder beim Schließen des Handrads 6 beschreiben. Wie weiter unten näher ausgeführt, können derartige Normsignale auch während des Betriebs des Systems 1 erstellt werden. Die Empfangseinheit 3 ist mit einem Rechner ausgerüstet, der ein Auswerteprogramm enthält. Das Auswerteprogramm vergleicht die von der Sensoreinheit 4 übermittelten Signale mit den im digitalen Speicher der Empfangseinheit vorliegenden Normsignalen. Kommt es zu einer Abweichung, die ein Algorithmus des Auswerteprogramms als nicht normgerecht einstuft, übermittelt die Empfangseinheit 3 ein Signal an die Steuereinheit 2. Ein nicht normgerechtes Signal liegt beispielsweise dann vor, wenn die Sensoreinheit eines Ventils, dessen vollständige Öffnung eine mehrfache Volldrehung des Handrads erfordert, lediglich eine einfache Drehung des Handrads detektiert. Das Auswerteprogramm er Empfangseinheit kann vorteilhaft auch so beschaffen sein, dass eine Abfolge von Bewegungen, die innerhalb einer vorgegebenen Zeitspanne am Handrad 6 durchgeführt wurden, erfasst und überprüft werden können. Dadurch ist es beispielsweise möglich zu prüfen, ob ein ordnungsgemäß geöffnetes Ventil auch ordnungsgemäß geschlossen wurde.

Das an die Steuereinheit 2 übermittelte Signal ermöglicht es einer Bedienperson der Steuereinheit, geeignete Maßnahmen zu ergreifen, beispielsweise das ordnungsgemäße Öffnen bzw. Schließen des Ventils zu veranlassen.

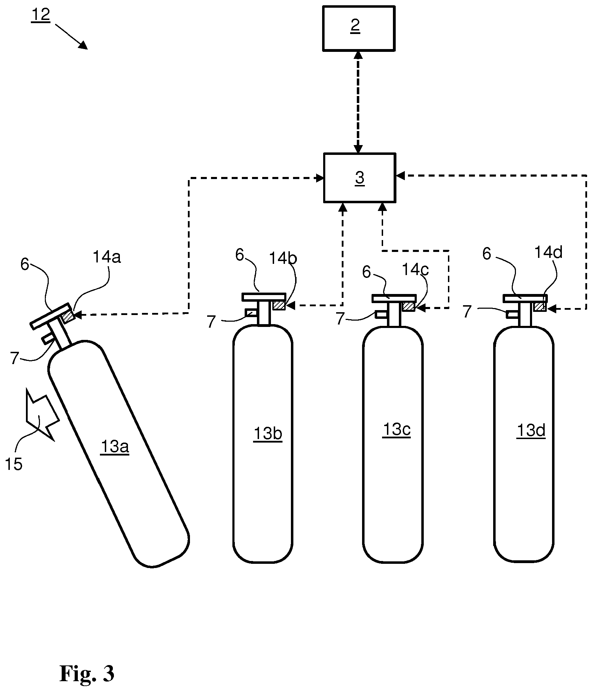

In Fig. 3, in der gleich wirkende Komponenten mit den gleichen Bezugsziffern gekennzeichnet sind wie in Fig. 1, ist ein erfindungsgemäßes System 12 gezeigt, das der Erfassung und Fernüberwachung von Zuständen einer Gruppe von Druckgasflaschen 13a, 13b, 13c, 13d dient, die sich beispielsweise innerhalb eines Raumes, etwa eines Lagers, auf einem Transportfahrzeug oder einer Werkstatt befinden. Das System 12 umfasst Sensoranordnungen 14a, 14b, 14c, 14d die jeweils im Bereich eines Handrads 6 am Entnahmeventil 7 der jeweiligen Druckgasflasche 13a, 13b, 13c, 13d angeordnet sind. Eine Empfangseinheit 3 ist ortsfest, beispielsweise innerhalb eines abgeschlossenen Raumes oder auf einem Transportfahrtzeug, oder in einem mobilen Gerät angeordnet und steht in drahtloser Datenverbindung sowohl mit den Sensoreinheiten 14a, 14b, 14c, 14d als auch einer Steuereinheit 2.

Die Sensoreinheiten 14a, 14b, 14c, 14d sind ähnlich der Sensoreinheit 4 aufgebaut und besitzen jeweils eine Sensorgruppe 8 mit Wandlereinheit 9, eine Sendeeinheit 10 und einen digitalen Speicher 11. Die Sensorgruppe 8 umfasst dabei bevorzugt mehrere Sensoren, mit denen neben einer Bewegung des Handrads 6 auch eine Bewegung der Druckgasflasche 13a, 13b, 13c, 13d selbst erfassbar ist. Beispielsweise umfasst die Sensorgruppe 8 einen 6-Achsen-Bewegungssensor, mittels dessen axiale Bewegungen in drei orthogonalen Raumrichtungen sowie Drehbewegungen um drei orthogonale Drehachsen detektiert werden können.

Im Betrieb des Systems 12 werden zunächst Normzustände erfasst. Dazu werden mittels der Sensoreinheiten 14a, 14b, 14c, 14d Bewegungszustände des Handrads 6 erfasst, digitalisiert und als digitale Signale der lokalen Empfangseinheit 3 übermittelt. In der Empfangseinheit 3 werden die übermittelten Informationen nach einem vorgegebenen Programm statistisch ausgewertet werden. Beispielsweise führt das Öffnen oder Schließen des Handrads 6 durch eine Bedienperson zu einer bestimmten typischen Signalfolge. Wird das Handrad 6 im Lauf einer gewissen Zeit mehrfach ordnungsgemäß geöffnet und geschlossen, führt dies zu Signalfolgen, die bestimmte übereinstimmende Merkmale aufweisen und von dem in der Empfangseinheit 3 vorliegenden Programm schließlich als "Normsignal" für das bestimmungsgemäße Öffnen bzw. Schließen des Handrads 6 interpretiert und als solches in einem Speicher der Empfangseinheit 3 abgespeichert wird. Ähnliche "Normsignale" können auch beispielsweise für den ordnungsgemäßen Transport der Druckgasflasche 14a erstellt werden. Anschließend beginnt der Regelbetrieb, in dem die Sensoreinheiten 14a, 14b, 14c, 14d der Empfangseinheit 3 in regelmäßigen Zeitabständen Signale über die erfassten Bewegungszustände der Handräder 6, zusammen mit einer Kennung der jeweiligen Druckgasflasche 13a, 13b, 13c, 13d übermitteln. In der Regel handelt es sich dabei um ein Nullsignal (keine Bewegung festgestellt) oder um ein anderes Normsignal (ordnungsgemäßes Öffnen bzw. Schließen des Ventils innerhalb einer gewissen, von einem Algorithmus errechneten Toleranz).

Empfängt nun die Empfangseinheit 3 ein Signal, das von den eingespeicherten Normsignalen abweicht, beispielsweise bei einer zu geringen Drehung des Handrads 6 beim Öffnen oder Schließen oder im Falle einer unsachgemäße Handhabung beim Transport, übermittelt die Empfangseinheit 3 ein entsprechendes Signal an die Steuereinheit 2, zusammen mit einer Kennung der entsprechenden Druckgasflasche 13a, 13b, 13c, 13d und ggf. einer Kennung der Empfangseinheit 3. Dadurch wird eine Bedienperson der Steuereinheit 2 über das Vorliegen eines Fehlers informiert und kann entsprechende Maßnahmen einleiten, beispielsweise eine Überprüfung der entsprechenden Druckgasflasche 13a, 13b, 13c, 13d veranlassen. In der Steuereinheit 2 liegt vorteilhaft zudem eine Datenbank vor, in der Informationen über die Druckgasflaschen 13a, 13b, 13c, 13d gespeichert sind, beispielsweise über das im Behälter gespeicherte Gas, das Datum der letzten Abfüllung oder Daten eines Kunden, an den Druckgasflasche 13a, 13b, 13c, 13d geliefert wurde. Mittels einer an die Steuereinheit 2 übermittelten Kennung der Empfangseinheit 3, in dessen Empfangsbereich die Druckgasflasche 13a, 13b, 13c, 13d steht, kann zudem die Druckgasflasche 13a, 13b, 13c, 13d leicht geortet werden.

Auch Notzustände können von der Empfangseinheit 3 erfasst werden. Stürzt beispielsweise eine Druckgasflasche um, wie in Fig. 3 anhand der Druckgasflasche 14a durch den Pfeil 15 angedeutet, wird auch diese Bewegung von der Sensorgruppe 8 erfasst und an die Empfangseinheit 3 übermittelt. Die Bewegung einer Druckgasflasche 14a beim Sturz unterscheidet sich signifikant von Bewegungen beim ordnungsgemäßen Flaschengebrauch. Demzufolge unterscheidet sich das in einem solchen Fall an die Empfangseinheit 3 übermittelte Signal signifikant von den in der Empfangseinheit 3 gespeicherten Normzuständen. Somit führt auch dieses Signal zur Abgabe eines Signals an die Steuereinheit 2 durch die Empfangseinheit 3. Im Übrigen können Signalfolgen, die für einen Sturz typisch sind, bereits im Speicher der Empfangseinheit 3 abgespeichert vorliegen. In diesem Fall ist es auch möglich, automatisch ein ausdrücklich als Warn- oder Notsignal gekennzeichnetes Signal an die Steuereinheit 2 abzugeben.

### Bezugszeichenliste:

- 1: System
- 2: Steuereinheit
- 3: Empfangseinheit
- 4,: Sensoreinheit
- 5: Leitung
- 6: Handrad
- 7: Entnahmeventil
- 8: Sensorgruppe
- 9: Wandlereinheit
- 10: Sendeeinheit
- 11: Speicher
- 12: System
- 13a, 13b, 13c, 13d: Druckgasflasche
- 14a, 14b, 14c, 14d: Sensoreinheit
- 15: Pfeil

## Patentansprüche

1. System zur Erfassung und Fernüberwachung von Bewegungszuständen eines Handrads (6) eines Entnahmeventils (7) eines Behälters (13a, 13b, 13c, 13d) für verflüssigtes oder unter Druck stehendes Gas zum Regulieren des Durchflusses durch eine fluidführende Leitung, mit einer Sensoreinheit (4, 14a, 14b, 14c, 14d) zum Erfassen von Bewegungszuständen des Handrads (6) und mit einer mit der Sensoreinheit (4, 14a, 14b, 14c, 14d) datenverbundenen Empfangseinheit (3), wobei
die Sensoreinheit (4, 14a, 14b, 14c, 14d) eine Sensorgruppe (8) mit einem oder mehreren Sensoren zum Erfassen einer Bewegung des Handrads und Erzeugen eines eine Information über die Bewegung enthaltenden digitalen Signals und eine Sendeeinheit (10) zum drahtlosen Übertragen des von der Sensorgruppe (8) erzeugten digitalen Signals an die Empfangseinheit (3) umfasst, und die Empfangseinheit (3) mit einer externen Steuereinheit (2) in Datenverbindung bringbar ist und mit einer Auswertesoftware ausgerüstet ist, die so ausgebildet ist, dass sie die von der Sensoreinheit (4, 14a, 14b, 14c, 14d) übermittelten digitalen Signale mit digitalen Signalen vorgegebener Normzustände vergleicht und im Falle einer vorgegebenen Abweichung ein Signal an die Steuereinheit (2) abgibt,
und das Handrad einem Entnahmeventil (7) eines Druckgasbehälters (13a, 13b, 13c, 13d) oder einem Gasflaschenbündel zugeordnet ist und die Sensoreinheit so ausgebildet ist, dass neben der Erfassung von Bewegungszuständen des Handrads (7) Bewegungszustände des Druckgasbehälters (13a, 13b, 13c, 13d) bzw. des Druckgasflaschenbündels erfassbar sind,
wobei die Auswertesoftware der Empfangseinheit (3) so ausgebildet ist, dass die Normzustände während des laufenden Betriebs nach einem mathematischen Algorithmus ermittelt werden.

2. System nach Anspruch 1, **dadurch gekennzeichnet, dass** als Sendeeinheit (10) ein aktiver Sender vorgesehen ist.

3. System nach Anspruch 1 oder 2, **dadurch gekennzeichnet, dass** die Sensorgruppe (8) einen 6-Achsen-Bewegungssensor enthält.

4. System nach einem der vorhergehenden Ansprüche, **dadurch gekennzeichnet, dass** die Sensorgruppe (8) einen Lichtsensor, einen Feuchtigkeitssensor, einen Drucksensor und/oder einen Temperatursensor enthält.

5. System nach einem der vorhergehenden Ansprüche, **dadurch gekennzeichnet, dass** als Empfangseinheit (3) ein IOT-Gateway vorgesehen ist, das über ein Kommunikationsnetzwerk mit einer Auswerteapplikation datenverbunden ist.

6. System nach einem der vorhergehenden Ansprüche, **dadurch gekennzeichnet, dass** die Sensoreinheit (4, 14a, 14b, 14c, 14d) mit einem Speicher (11) zum zumindest vorübergehenden Speichern der von der Sensorgruppe (8) erfassten Informationen datenverbunden ist.

7. System nach einem der vorhergehenden Ansprüche, **dadurch gekennzeichnet, dass** die Steuereinheit (2) mit einer Mehrzahl von Empfangseinheiten (3) und diese jeweils mit einer Mehrzahl von Sensoreinheiten (4, 14a, 14b, 14c, 14d) in Datenverbindung stehen.

8. Verfahren zur Erfassung und Fernüberwachung von Bewegungszuständen eines Handrads (6) eines Ventils (7) zum Kontrollieren des Durchflusses durch eine fluidführende Leitung eines Behälters (13a, 13b, 13c, 13d) für verflüssigtes oder unter Druck stehendes Gas, bei dem eine Sensorgruppe (4, 14a, 14b, 14c, 14d) eine Bewegung des Handrads (6) erfasst, die erfassten Bewegungen in digitale Signale umgewandelt und die digitalen Signale zusammen mit einer Kennung des Handrads (6) mittels einer Sendeeinheit (10) in vorgegebenen Zeitabständen an eine Empfangseinheit (3) übermittelt werden, und in der Empfangseinheit (3) die von der Sendeeinheit (10) übermittelten Informationen mit Signalen von Normzuständen verglichen werden, wobei im Falle einer Abweichung von der Empfangseinheit (3) ein Signal an eine mit der Empfangseinheit datenverbundene Steuereinheit (2) abgegeben wird, wobei das Handrad einem Entnahmeventil (7) eines Druckgasbehälters (13a, 13b, 13c, 13d) oder einem Gasflaschenbündel zugeordnet ist und neben der Erfassung von Bewegungszuständen des Handrads (7) Bewegungszustände des Druckgasbehälters (13a, 13b, 13c, 13d) bzw. des Druckgasflaschenbündels erfasst werden,
wobei zur Ermittlung der Normzustände in der Empfangseinheit (3) während des laufenden Betriebs Informationen über Bewegungen einer Mehrzahl von Handrädern (6) erfasst und nach einem statistischen Algorithmus ausgewertet werden.

9. Verfahren nach Anspruch 8, **dadurch gekennzeichnet, dass** das von der Empfangseinheit (3) abgegebene Signal selbsttätig abgegeben wird.

10. Verfahren nach Anspruch 8 oder 9, **dadurch gekennzeichnet, dass** die Informationen von der Sendeeinheit (10) selbsttätig in regelmäßigen Zeitabständen übermittelt oder auf Abruf durch die Steuereinheit (2) vorgehalten werden

## Claims

1. System for recording and remotely monitoring states of movement of a handwheel (6) of an extraction valve (7) of a container (13a, 13b, 13c, 13d) for a liquefied or pressurized gas for regulating the flow through a liquid-carrying line, with a sensor unit (4, 14a, 14b, 14c, 14d) for recording states of movement of the handwheel (6) and with a receiving unit (3) data-connected to the sensor unit (4, 14a, 14b, 14c, 14d), wherein the sensor unit (4, 14a, 14b, 14c, 14d) comprises a group of sensors (8) with one or more sensors for recording a movement of the handwheel and generating a digital signal containing information about the movement and a transmitting unit (10) for wirelessly transmitting the digital signal generated by the group of sensors (8) to the receiving unit (3), and the receiving unit (3) can be brought into data connection with an external control unit (2) and is equipped with evaluation software, which is designed such that it compares the digital signals transmitted by the sensor unit (4, 14a, 14b, 14c, 14d) with digital signals of specified standard states and, in the event of a specified deviation, emits a signal to the control unit (2), and the handwheel is assigned to an extraction valve (7) of a compressed-gas container (13a, 13b, 13c, 13d) or to a gas cylinder bundle and the sensor unit is designed such that, in addition to recording states of movement of the handwheel (7), states of movement of the compressed-gas container (13a, 13b, 13c, 13d) or the compressed-gas cylinder bundle can be recorded, wherein the evaluation software of the receiving unit (3) is designed such that the standard states are determined on the basis of a mathematical algorithm while operation is in progress.

2. System according to Claim 1, **characterized in that** an active transmitter is provided as the transmitting unit (10).

3. System according to Claim 1 or 2, **characterized in that** the group of sensors (8) includes a 6-axis motion sensor.

4. System according to one of the preceding claims, **characterized in that** the group of sensors (8) includes a light sensor, a moisture sensor, a pressure sensor and/or a temperature sensor.

5. System according to one of the preceding claims, **characterized in that** an IOT gateway that is data-connected to an evaluation application via a communication network is provided as the receiving unit (3).

6. System according to one of the preceding claims, **characterized in that** the sensor unit (4, 14a, 14b, 14c, 14d) is data-connected to a memory (11) for at least temporarily storing the items of information recorded by the group of sensors (8).

7. System according to one of the preceding claims, **characterized in that** the control unit (2) is in data connection with a plurality of receiving units (3) and the latter are respectively in data connection with a plurality of sensor units (4, 14a, 14b, 14c, 14d) .

8. Method for recording and remotely monitoring states of movement of a handwheel (6) of a valve (7) for controlling the flow through a liquid-carrying line of a container (13a, 13b, 13c, 13d) for liquefied or pressurized gas, in which a group of sensors (4, 14a, 14b, 14c, 14d) records a movement of the handwheel (6), the recorded movements are converted into digital signals and the digital signals are transmitted together with an identification of the handwheel (6) at specified time intervals by means of a transmitting unit (10) to a receiving unit (3), and in the receiving unit (3) the items of information transmitted by the transmitting unit (10) are compared with signals of standard states, wherein, in the event of a deviation, a signal is emitted by the receiving unit (3) to a control unit (2) data-connected to the receiving unit, wherein the handwheel is assigned to an extraction valve (7) of a compressed-gas container (13a, 13b, 13c, 13d) or to a compressed-gas cylinder bundle and, in addition to the recording of states of movement of the handwheel (7), states of movement of the compressed-gas container (13a, 13b, 13c, 13d) or of the compressed-gas cylinder bundle are recorded, wherein, for determining the standard states, items of information concerning movements of a plurality of handwheels (6) are recorded in the receiving unit (3) while operation is in progress and are evaluated on the basis of a statistical algorithm.

9. Method according to Claim 8, **characterized in that** the signal emitted by the receiving unit (3) is emitted automatically.

10. Method according to Claim 8 or 9, **characterized in that** the items of information are transmitted by the transmitting unit (10) automatically at regular time intervals or are kept until they are retrieved by the control unit (2).

## Revendications

1. Système de détection et de surveillance à distance d'états de déplacement d'un volant (6) d'une vanne d'extraction (7) d'un récipient (13a, 13b, 13c, 13d) pour gaz liquéfié ou sous pression permettant de réguler le débit dans une conduite de transport de fluide, comportant une unité de détection (4, 14a, 14b, 14c, 14d) permettant de détecter des états de déplacement du volant (6) et une unité de réception (3) reliée par liaison de données à l'unité de détection (4, 14a, 14b, 14c, 14d), dans lequel
l'unité de détection (4, 14a, 14b, 14c, 14d) comprend un groupe de capteurs (8) comportant un ou plusieurs capteurs permettant de détecter un déplacement du volant et de générer un signal numérique contenant une information concernant le déplacement et une unité d'émission (10) permettant de transmettre sans fil le signal numérique généré par le groupe de capteurs (8) à l'unité de réception (3), et l'unité de réception (3) peut être mise en liaison de données avec une unité de commande externe (2) et est équipée d'un logiciel d'évaluation qui est conçu de manière à comparer les signaux numériques transmis par l'unité de détection (4, 14a, 14b, 14c, 14d) avec des signaux numériques d'états normaux prédéterminés et, en cas d'écart prédéterminé, à délivrer un signal à l'unité de commande (2),
et le volant est associé à une vanne d'extraction (7) d'un réservoir de gaz comprimé (13a, 13b, 13c, 13d) ou à un groupement de bouteilles de gaz et l'unité de détection est conçue de manière à ce qu'en plus de la détection d'états de déplacement du volant (7), des états de déplacement du réservoir de gaz comprimé (13a, 13b, 13c, 13d) ou du groupement de bouteilles de gaz comprimé puissent être détectés, dans lequel
le logiciel d'évaluation de l'unité de réception (3) est conçu de manière à ce que les états normaux soient déterminés au cours du fonctionnement conformément à un algorithme mathématique.

2. Système selon la revendication 1, **caractérisé en ce qu'**il est prévu en tant qu'unité d'émission (10) un émetteur actif.

3. Système selon la revendication 1 ou 2, **caractérisé en ce que** le groupe de capteurs (8) contient un capteur de déplacement à 6 axes.

4. Système selon l'une des revendications précédentes, **caractérisé en ce que** le groupe de capteurs (8) contient un capteur de lumière, un capteur d'humidité, un capteur de pression et/ou un capteur de température.

5. Système selon l'une des revendications précédentes, **caractérisé en ce qu'**il est prévu en tant qu'unité de réception (3) une passerelle IOT qui est reliée par l'intermédiaire d'un réseau de communication à une application d'évaluation.

6. Système selon l'une des revendications précédentes, **caractérisé en ce que** l'unité de détection (4, 14a, 14b, 14c, 14d) est reliée par liaison de données à une mémoire (11) permettant de stocker au moins temporairement les informations détectées par le groupe de capteurs (8).

7. Système selon l'une des revendications précédentes, **caractérisé en ce que** l'unité de commande (2) est reliée par liaison de données à une pluralité d'unités de réception (3) et **en ce que** celles-ci sont respectivement reliées par liaison de données à une pluralité d'unités de détection (4, 14a, 14b, 14c, 14d).

8. Procédé de détection et de surveillance à distance d'états de déplacement d'un volant (6) d'une vanne (7) permettant de commander le débit dans une conduite de transport de fluide d'un récipient (13a, 13b, 13c, 13d) pour gaz liquéfié ou sous pression, dans lequel un groupe de capteurs (4, 14a, 14b, 14c, 14d) détecte un déplacement du volant (6), convertit les déplacements détectés en signaux numériques, les signaux numériques étant transmis à des intervalles de temps prédéterminés à une unité de réception (3) conjointement avec un identificateur du volant (6) au moyen d'une unité d'émission (10), et les informations transmises par l'unité d'émission (10) sont comparées dans l'unité de réception (3) avec des signaux d'états normaux, dans lequel, en cas d'écart par rapport à l'unité de réception (3), un signal est délivré à une unité de commande (2) reliée par liaison de données à l'unité de réception, dans lequel le volant est associé à une vanne d'extraction (7) d'un réservoir de gaz comprimé (13a, 13b, 13c, 13d) ou à un groupement de bouteilles de gaz et, en plus de la détection d'états de déplacement du volant (7), des états de déplacement du réservoir de gaz comprimé (13a, 13b, 13c, 13d) ou du groupement de bouteilles de gaz comprimé sont détectés, dans lequel, afin de déterminer les états normaux dans l'unité de réception (3) au cours du fonctionnement, des informations concernant des déplacements d'une pluralité de volants à main (6) sont détectées et évaluées conformément à un algorithme statistique.

9. Procédé selon la revendication 8, **caractérisé en ce que** le signal délivré par l'unité de réception (3) est délivré automatiquement.

10. Procédé selon la revendication 8 ou 9, **caractérisé en ce que** les informations sont transmises automatiquement par l'unité d'émission (10) à des intervalles de temps réguliers ou sont mises à disposition sur demande par l'unité de commande (2).
